# EUROPÄISCHE PATENTSCHRIFT

(11) **EP 1 263 638 B1**
(45) Veröffentlichungstag und Bekanntmachung des Hinweises auf die Patenterteilung: **04.02.2004**
(21) Anmeldenummer: 01911718.3
(22) Anmeldetag: 02.03.2001
(51) Int. Cl.: B60T 8/36, F16K 31/06

(54) **VERFAHREN ZUR HERSTELLUNG UND BEFESTIGUNG EINES ELEKTROMAGNETVENTILS**
METHOD FOR MANUFACTURING AND MOUNTING A SOLENOID VALVE
PROCEDE DE FABRICATION ET DE FIXATION D'UNE ELECTROVALVE

(30) Priorität: 04.03.2000 DE 10010734
(43) Veröffentlichungstag der Anmeldung: 11.12.2002
(73) Patentinhaber: Continental Teves AG & Co. oHG, 60488 Frankfurt (DE)
(72) Erfinder: VOSS, Christoph, 60386 Frankfurt/Main (DE); HOLL, Frank, 56269 Marienhausen (DE)
(86) Internationale Anmeldenummer: PCT/EP2001/002351
(87) Internationale Veröffentlichungsnummer: WO 2001/066396

(56) Entgegenhaltungen:
- WO-A-01/00473
- WO-A-95/08462
- WO-A-96/15926
- WO-A-98/00322
- WO-A-99/42348
- DE-A- 19 607 933
- US-A- 5 681 097

## Beschreibung

Die Erfindung betrifft Verfahren zur Herstellung und Befestigung eines ein Elektromagnetventils, insbesondere für schlupfgeregelte Kraftfahrzeugbremsanlagen, nach dem Oberbegriff des Patentanspruchs 1.

Aus der DE 195 29 724 A1 ist bereits ein Elektromagnetventil bekannt geworden, dessen zweiteiliges Ventilgehäuse aus einem massiven Drehteil und einer im Drehteil verstemmten Ventilhülse besteht. Das Drehteil nimmt die durch das Einstemmen in einem Ventilträger entstehenden Einpress- als auch Haltekräfte auf, während die Verstemmung der Ventilhülse im Drehteil dem im Ventilgehäuse wirkenden Hydraulikdruck ausgesetzt ist, der abhängig von der Stellung zweier miteinander über einen Mitnehmer gekoppelten Ventilschließkörper in gewissen Grenzen variabel ist. Der erste Ventilschließkörper weist zur Verbindung mit dem Mitnehmer im Übergangsbereich zu einem Stößelabschnitt eine Ringnut auf, in die der aus einem Dünnblechteil gefertigte Mitnehmer eingreift. Das von der Ringnut abgewandte Mitnehmerende umgreift den massiven, kolbenförmigen zweiten Mitnehmer und ist mit diesem verpresst.

In der DE19607933A ist ein Elektromagnetventil beschrieben, dessen scheibenförmiger Magnetflußleitkörper durch ein Tiefziehverfahren hergestellt ist. Der Magnetflußleitkörper ist an seinem Außenumfang mittels einer Außenverstemmung des den Aufnahmekörper bildenden Werkstoffs in einer Gehäusebohrung des Aufnahmekörpers befestigt. Die Abdichtung des Elektromagnetventils im Aufnahmekörper erfolgt über einen zwischen dem Magnetflußleitkörper und einer Gehäusestufe eingespannten Dichtring.

Aus der WO96/15926A ist bereits ein Verfahren zur Herstellung und Befestigung eines in einem Ventilträger befestigten Elektromagnetventils der angegebenen Art bekannt, dessen rohrförmiges Ventilgehäuse von einem scheibenförmigen Magnetflußleitkörper umgeben ist, an dessen Außenumfang ein weiterer, glockenförmiger Magnetflußkörper befestigt ist. Zwischen dem glockenförmigen Magnetflußkörper und dem Ventilträger ist zur Fixierung des Elektromagnetventils ein Klemmring eingepreßt. Die Abdichtung des Elektromagnetventils im Ventilträger geschieht mittels eines zwischen dem scheibenförmigen Magnetflußkörper und einem Ringfilter angeordneten Dichtrings. Im rohrförmigen Ventilgehäuse befindet sich ein Anker mit einem Hilfsverschlußstück, das innerhalb eines weiteren rohrförmigen Ankers angeordnet ist, der im Anschluß an ein Übergangsstück mit einem Hauptverschlußstück versehen ist.

Durch die gewählte Konstruktion entsteht ein relativ langes, schweres und teuer herzustellendes Elektromagnetventil.

Daher ist es die Aufgabe der vorliegenden Erfindung, ein Elektromagnetventil der angegebenen Art mit möglichst einfachen, funktionsgerechten Mitteln kostengünstig und kleinbauend herzustellen und in einem Ventilträger auf vorteilhafte Art anzuordnen.

Diese Aufgabe wird erfindungsgemäß für das Elektromagnetventil der angegebenen Art durch die den Patentanspruch 1 kennzeichnenden Merkmale gelöst.

Weitere Merkmale, Vorteile und Anwendungsmöglichkeiten der Erfindung gehen im nachfolgenden aus der Beschreibung mehrerer Ausführungsbeispiele hervor.

Es zeigen
- Fig. 1: eine erste zweckmäßige Ausführungsform der Erfindung anhand eines Längsschnitts durch ein Elektromagnetventil,
- Fig. 2: eine Abwandlung des Gegenstandes nach Fig. 1,
- Fig. 3: eine Abwandlung des in Fig. 2 gezeigten Elektromagnetventils,
- Fig. 4: basierend auf dem Ventilgehäuseaufbau des Elektromagnetventils nach den Fig. 2, 3 eine alternative Ausgestaltung zur Konstruktion und Führung des zweiten Ventilschließkörpers im Ventilgehäuse.

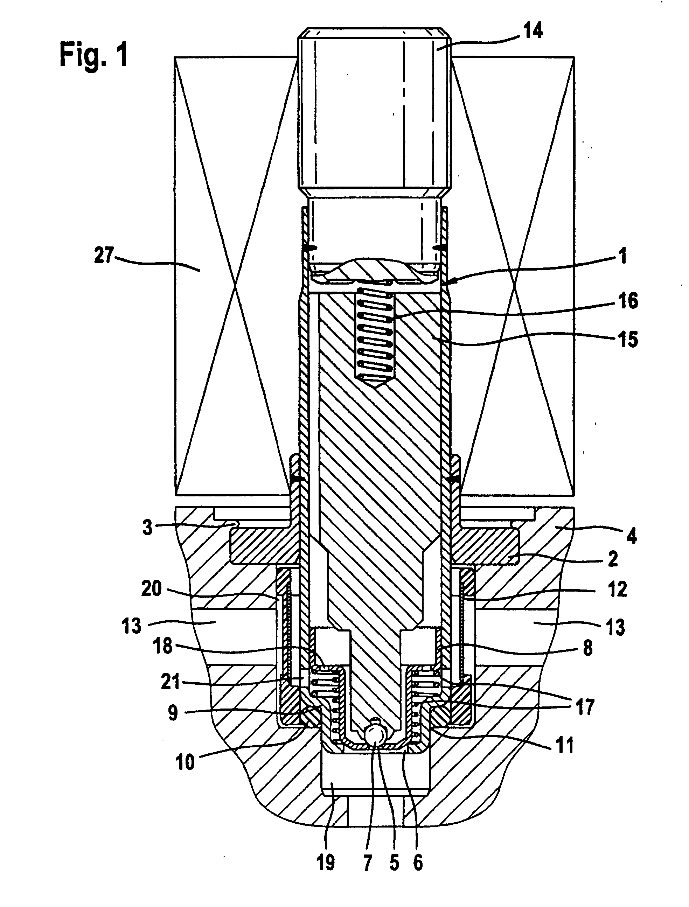

Die Fig. 1 zeigt in einer erheblichen Vergrößerung ein Elektromagnetventil mit einem einteiligen, im Tiefziehverfahren als Ventilhülse ausgeführten Ventilgehäuse 1, das einen separaten am Außenumfang des Ventilgehäuses aufgesetzten und mittels Laserschweißung befestigten Haltekragen 2 aufnimmt, der durch spanlose Umformung beispielsweise als Kaltschlagteil hergestellt ist. Der im wesentlichen scheibenförmige Haltekragen 2 ist mit dem komplettierten Ventilgehäuse 1 in einer gestuften Aufnahmebohrung eines blockförmigen Ventilträgers 4 eingesetzt und mittels einer ringförmigen Außenverstemmung 3 des Ventilträgerwerkstoffs sicher befestigt und abgedichtet. Oberhalb des Haltekragens 2 ist der offene Endabschnitt des hülsenförmigen Ventilgehäuses 1 mit einem Stopfen 14 verschlossen, der gleichzeitig die Funktion eines Magnetkerns übernimmt. Auch der Stopfen 14 besteht aus einem kostengünstigen und hinreichend präzise zu fertigenden Kaltschlagteil, das mit dem Ventilgehäuse 1 am Außenumfang laserverschweißt ist. Unterhalb des Stopfens 14 befindet sich ein Magnetanker 15, der aus einem Rund- oder Mehrkantprofil durch Kaltschlagen bzw. Fließpressen gleichfalls sehr kostengünstig hergestellt ist. Der Magnetanker 15 verschließt unter Wirkung einer Druckfeder 16 in der Ventilgrundstellung mit dem am stößelförmigen Fortsatz des Magnetankers 15 angebrachten ersten Ventilkörper 7 einen ersten, in einem zweiten Ventilschließkörper 8 angeordneten Ventildurchlass 5. Hierzu ist der erste Ventilschließkörper 7 zweckmäßigerweise als Kugel in dem Stößelabschnitt des Magnetankers 15 mittels Presspassung gehalten, während der zweite Ventilschließkörper 8 im wesentlichen als topfförmiges Tiefziehteil ausgeführt ist, das unter der Wirkung einer Rückstellfeder 17 in Richtung des ersten Ventilschließkörpers 7 beaufschlagt ist. Infolge der Wirkung der zwischen dem Stopfen 14 und dem Magnetanker 15 angeordneten Druckfeder 16 verharrt allerdings in der abbildungsgemäßen Ventilgrundstellung der Boden des topfförmigen zweiten Ventilschließkörpers 8 an einem im unteren Ende des Ventilgehäuses 1 vorgesehenen zweiten Ventildurchlaß 6, dessen freischaltbarer Durchlassquerschnitt erheblich größer ist als der freischaltbare Öffnungsquerschnitt des ersten Ventildurchlasses 5.

Die Rückstellfeder 17 stützt sich an einer Schulter des als Stufenkolben ausgeführten zweiten Ventilschließkörpers 8 ab, der vorzugsweise innerhalb der Schulter über gestanzte Druckausgleichsöffnungen 18 verfügt, wobei der oberhalb der Schulter gelegene Bund an der Innenwandung des Ventilgehäuses 1 geführt ist.

Zur Aufnahme und Abdichtung des Ventilgehäuses 1 in der Bohrungsstufe 11 ist das Ventilgehäuse 1 im Bereich einer Gehäusestufe 12 im Durchmesser verkleinert und mit einem Dichtring 10 versehen, so dass sich zwischen dem Ventilgehäuse 1 und der Bohrungsstufe 11 kein Leckagestrom zwischen dem Druckmitteleinlass 13 und dem Druckmittelauslass 19 einstellen kann. Der im wesentlichen als Querkanal im Ventilträger 4 dargestellte Druckmitteleinlass 13 setzt sich über den im Hohlraum 20 des Ventilträgers 4 befindlichen Ringfilter 12 zur gestanzten Querbohrung 21 im Ventilgehäuse 1 fort, so dass einlassseitiges Druckmittel unmittelbar am zweiten Ventilschließkörper 8 ansteht, als auch über die Druckausgleichsöffnungen 18 zum ersten Ventilkörper 7 gelangt.

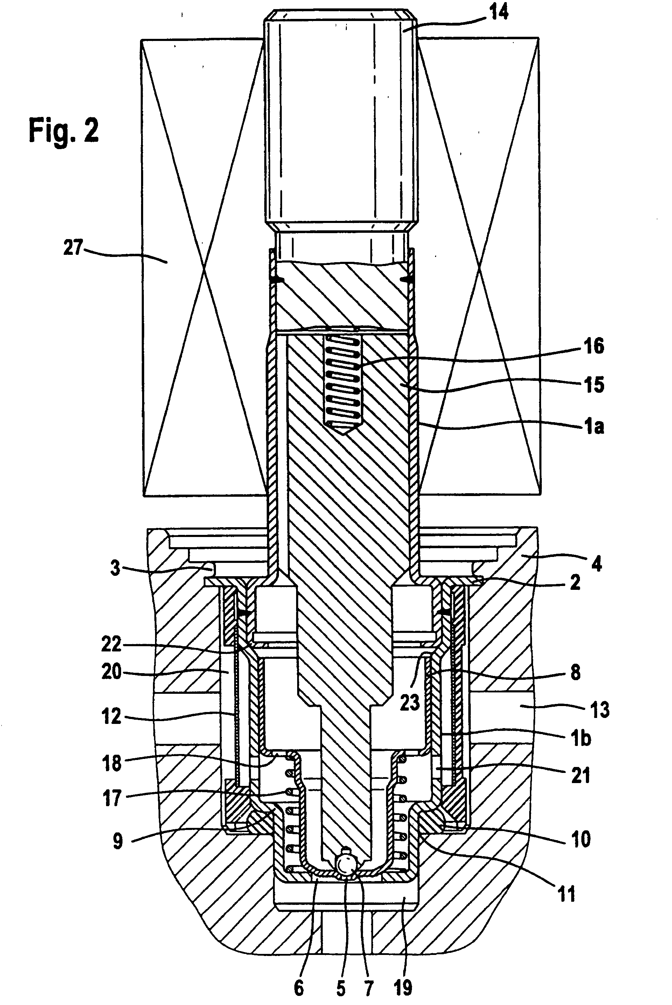

Das Elektromagnetventil nach Fig. 2 unterscheidet sich von der Darstellung nach Fig. 1 durch die zweiteilige Ausführung des Ventilgehäuses 1, das der Länge nach aus zwei abschnittsweise ineinander eingefügte Hülsenteile 1a, 1b besteht, wovon das äußere Hülsenteil 1b im Tiefziehverfahren zu einem Gehäusetopf ausgebildet ist, dessen abgekröpfter Rand den Haltekragen 2 bildet. Zur Begrenzung der Einschubtiefe des den Stopfen 14 aufnehmenden Hülsenteils 1a ist dieses am vom Stopfen 14 abgewandten Hülsenende auf den Innendurchmesser des topfförmigen, über das innere Hülsenteil 1a aufgeschobene äußere Hülsenteil 1b aufgeweitet und mit einem Radius 22 nach innen eingezogen, der an einer Wandschräge 23 des Hülsenteils 1b anliegt. Im Überdeckungsbereich der beiden Hülsenteile 1a, 1b befindet sich eine Laserschweißnaht, die zur sicheren Fixierung beider Hülsenteile 1a, 1b beiträgt, so dass insgesamt durch die Überlagerung der Wandstärken beider Hülsenteile 1a, 1b im Hülsenüberdekkungsbereich eine steife Stützstruktur für das Ventilgehäuse 1 zustande kommt, die die Aufnahme der auf den Haltekragen 2 einwirkenden Verstemmkraft begünstigt.

Die weiteren, aus der Fig. 2 ersichtlichen Einzelheiten entsprechen dem Ausführungsbeispiel nach Fig. 1, so dass zur Vervollständigung des Beschreibungsteils zu Fig. 2 auf den Beschreibungsteil für Fig. 1 verwiesen wird.

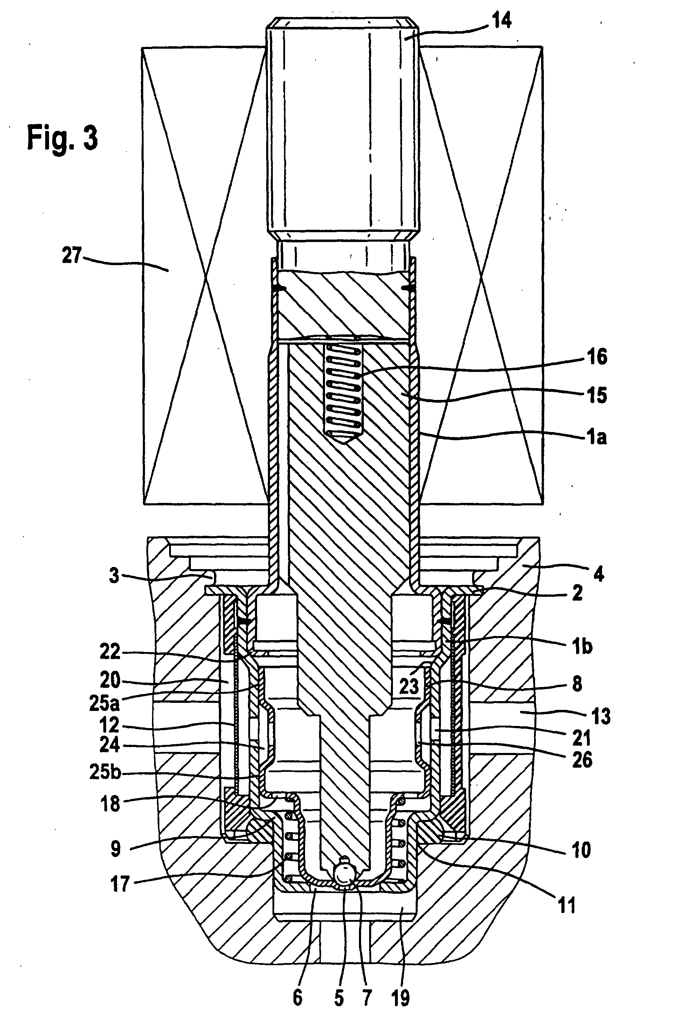

Das Elektromagnetventil nach Fig. 3 unterscheidet sich von dem vorangegangenen Ausführungsbeispielen nach den Fig. 1 und 2 durch die führungs- als auch reibungsoptimierte Gestaltung des zweiten Ventilkörpers 8, dessen erweiterter, an der Innenwandung des Hülsenteils 1b anliegender Wandabschnitt in Richtung der Ventillängsachse eine Unterbrechung der Gleitflächenabschnitte aufweist, wodurch sich der Reibflächenanteil verkleinert und sich die Zentrierung des zweiten Ventilschließkörpers 8 im Ventilgehäuse 1 verbessert. Während einer Hubfunktion des topfförmigen Ventilkörpers 8 wird somit der Druckmitteldurchlass im Bereich der in dem Hülsenteil 1b und im zweiten Ventilschließkörper 8 eingelassenen Querbohrungen 26 nicht behindert, da eben der an die Querbohrungen 26 angrenzende Wandabschnitt des zweiten Ventilschließkörpers 8 in Richtung der Ventillängsachse etwas eingezogen ist. Es ergibt sich folglich zwischen der Außenwand des zweiten Ventilschließkörpers 8 und der Innenwand des Hülsenteils 1b ein Ringraum 24, der den vertikalen Abstand als auch die Größe der Gleitflächen 25a, 25b definiert.

Alle übrigen aus der Fig. 3 ersichtlichen Merkmale entsprechen im wesentlichen den bereits erläuterten Elektromagnetventilen nach den Fig. 1 und 2, so dass es hierzu keinerlei Ergänzungen bedarf, so daß vielmehr auf die voran beschriebenen Ausführungsformen verwiesen werden kann.

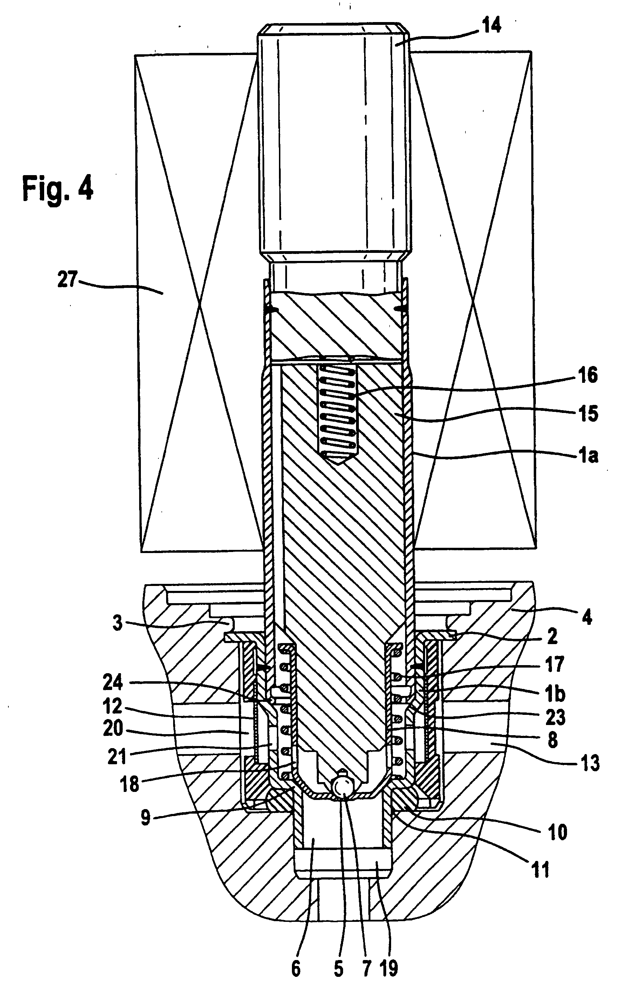

Das Elektromagnetventil nach Fig. 4 weist abweichend von den vorangegangenen Ausführungsbeispielen nach den Fig. 1 bis 3 eine besonders geschickte Zentrierung des zweiten Ventilschließkörpers 8 am ersten Ventilschließkörper 7 auf, wozu der Innendurchmesser des zweiten Ventilschließkörpers 8 an den Außendurchmesser des eingeschnürten Stößelabschnitts am Magnetanker 15 angepasst ist, so dass die dem Magnetanker 15 und dem zweiten Ventilsitzkörper 8 zugehörigen Wandabschnitte miteinander korrespondierende Gleitflächen darstellen. Damit ist der zweite Ventilschließkörper 8 lediglich über den Stößelabschitt gestülpt und konzentrisch zum Magnetanker 15 ausgerichtet. Die präzise Führung des zweiten Ventilschließkörpers 8 geschieht somit unabhängig von etwaigen Maßtoleranzen des Ventilgehäuses 1, so dass Maßtoleranzen des Ventilgehäuses 1 keinerlei Einfluss nehmen auf die Funktion des zweiten topfförmigen Ventilschließkörpers 8. Die Ventilsitzfläche des zweiten Ventilschließkörpers 8 ist nunmehr an der Gehäusestufe 9 vorgesehen, so dass der sich in die Bohrungsstufe 11 erstreckende Fortsatz des Hülsenteils 1b lediglich eine Führungs- und Dichtfunktion des Elektromagnetventils im Ventilträger 4 übernimmt.

Die übrigen, bisher nicht erwähnten Einzelheiten des Elektromagnetventils nach Fig. 4 können aus den vorangegangenen Ausführungsformen und deren Erläuterung nach den Fig. 1 bis 3 entnommen werden. Die für den Betrieb der abgebildeten Elektromagnetventile selbstverständlich erforderlichen Ventilspulen 27 sollen hierbei nur sporadisch erwähnt werden.

### Bezugszeichenliste

- 1: Ventilgehäuse
- 2: Haltekragen
- 3: Außenverstemmung
- 4: Ventilträger
- 5,6: Ventildurchlässe
- 7: erster Ventilschließkörper
- 8: zweiter Ventilschließkörper
- 9: Gehäusestufe
- 10: Dichtring
- 11: Bohrungsstufe
- 12: Ringfilter
- 13: Druckmitteleinlass
- 14: Stopfen
- 15: Magnetanker
- 16: Druckfeder
- 17: Rückstellfeder
- 18: Druckausgleichsöffnung
- 19: Druckmittelauslass
- 20: Hohlraum
- 21: Querbohrung
- 22: Radius
- 23: Wandschräge
- 24: Ringraum
- 25a,: 25b Gleitflächen
- 25: Ventilspule
- 26: Querbohrung
- 27: Ventilspule

## Patentansprüche

1. Verfahren zur Herstellung und Befestigung eines Elektromagnetventils, insbesondere für schlupfgeregelte Kraftfahrzeug-Bremsanlagen, mit einem in einem Ventilgehäuse (1) angeordneten ersten- und einem zweiten Ventilschließkörper (7, 8), die in koaxialer Anordnung im Ventilgehäuse (1) einen ersten als auch einen zweiten Ventildurchlass (5, 6) zu öffnen oder zu verschließen vermögen, mit einem in das Ventilgehäuse (1) einmündenden Druckmitteleinlassund einem Druckmittelauslasskanal (13, 19), wobei der erste Ventilschließkörper (7) abhängig von der elektromagnetischen Erregung einer Ventilspule (27) den im zweiten Ventilschließkörper (8) gelegenen ersten Ventildurchlass (5) zu öffnen oder zu verschließen vermag und wobei der zwischen dem Ventilgehäuse (1) und dem zweiten Ventilschließkörper (8) angeordnete zweite Ventildurchlass (6) ausschließlich in der Offenstellung des ersten Ventilschließkörpers (7) hydraulisch in Offenstellung schaltbar ist, **gekennzeichnet durch** nachfolgende Merkmale:
- Tiefziehen des Ventilgehäuses (1) zu einer Hülse,
- Herstellen eines Haltekragens (2) **durch** ein spanloses Umformverfahren, der am Außenumfang des Ventilgehäuses (1) mittels Laserschweißung befestigt wird,
- Tiefziehen des zweiten Ventilschließkörpers (8) zu einer Topfkontur, in dessen dünnwandigen Topfboden unmittelbar der erste Ventildurchlaß (5) eingestanzt oder eingeprägt wird,
- Herstellen des zweiten Ventildurchlasses (6) **durch** Stanzen oder Prägen einer Öffnung in das untere Ende des Ventilgehäuses (1), wobei der Öffnungsquerschnitt des zweiten Ventildurchlasses (6) **durch** das Stanzen oder Prägen gegenüber dem ersten Ventildurchlaß (5) eine größere Nennweite aufweist,
- Befestigen des Haltekragens (2) in einem Ventilträger (4) mittels einer Außenverstemmung (3) von Werkstoffvolumen des Ventilträgers (4).

2. Verfahren nach Anspruch 1, **dadurch gekennzeichnet, dass** das Ventilgehäuse (1) im Bereich des zweiten Ventildurchlasses (6) eine Gehäusestufe (9) aufweist, an der am Außenumfang ein Dichtring (10) angeordnet wird, der in Längsrichtung zur Ventilrotationsachse an einer Bohrungsstufe (11) des Ventilträgers (4) angepresst wird sowie in Querrichtung zur Ventilrotationsachse von einem Ringfilter (12) begrenzt wird, der sich den Druckmitteleinlass (13) überdeckend zwischen dem Ventilgehäuse (1) und der Innenwandung des Ventilträgers (4) in einem Hohlraum (20) bis zum Haltekragen (2) erstreckt.

3. Verfahren nach einem der vorhergehenden Ansprüche, **dadurch gekennzeichnet, dass** das Ventilgehäuse (1) einteilig ausgeführt wird, dessen vom zweiten Ventildurchlass (6) abgewandtes Ende von einem als Magnetkern wirksamen Stopfen (14) verschlossen wird, der als Kaltschlag- bzw. Fließpressteil ausgebildet wird.

4. Verfahren nach Anspruch 1, **dadurch gekennzeichnet, dass** der Haltekragen (2) durch ein Kaltschlagteil gebildet wird.

5. Verfahren nach einem der vorhergehenden Ansprüche 1 bis 3, **dadurch gekennzeichnet, dass** das Ventilgehäuse (1) aus zwei abschnittsweise ineinander eingefügte Hülsenteile (1a, 1b) gebildet wird, wovon das äußere Hülsenteil (1b) im Tiefziehverfahren zu einem Gehäusetopf ausgebildet wird, dessen abgekröpfter Rand den Haltekragen (2) bildet.

6. Verfahren nach Anspruch 1, **dadurch gekennzeichnet, dass** der zweite Ventilschließkörper (8) mit seiner Innenwandung an einem den ersten Ventilschließkörper (7) aufnehmenden Stößelabschnitt eines Magnetankers (15) zentriert wird, der aus einem Kaltschlagteil hergestellt wird.

## Claims

1. Method of manufacturing and attaching an electromagnetic valve, in particular for slip-controlled motor vehicle brake systems, with a first and a second valve closure member (7, 8) which are accommodated in a valve housing (1) and, in coaxial arrangement in the valve housing (1), are adapted to open or close a first and a second valve passage (5, 6), with a pressure fluid inlet channel and a pressure fluid outlet channel (13, 19) opening into the valve housing (1), wherein the first valve closure member (7) in response to the electromagnetic excitation of a valve coil (27), is adapted to open or close the first valve passage (5) disposed in the second valve closure member (8), and wherein the second valve passage (6) arranged between the valve housing (1) and the second valve closure member (8) is adapted to be switched hydraulically into an open position exclusively when the first valve closure member (7) adopts the open position,
**characterized by** the following features:
- deepdrawing the valve housing (1) to form a sleeve,
- manufacturing a retaining collar (2) by a non-cutting shaping operation, said collar being attached at the outside periphery of the valve housing (1) by means of laser welding,
- deepdrawing the second valve closure member (8) to form a bowl contour in whose thin-walled bowl bottom the first valve passage (5) is directly punched or engraved,
- manufacturing the second valve passage (6) by punching or engraving an opening into the bottom end of the valve housing (1), with the opening cross-section of the second valve passage (6) having a greater nominal width than the first valve passage (5), which is due to the punching or engraving operation
- attaching the retaining collar (2) in a valve support member (4) by means of outside calking (3) of material volume of the valve support member (4).

2. Method as claimed in claim 1,
**characterized in that** the valve housing (1) in the area of the second valve passage (6) has a housing step (9), at the outside periphery of which a ring seal (10) is arranged that is pressed against a bore step (11) of the valve support member (4) in a longitudinal direction relative to the valve's axis of rotation and is limited by a ring filter (12) in a transverse direction relative to the valve's axis of rotation, said ring filter covering the pressure fluid inlet (13) and extending between the valve housing (1) and the inside wall of the valve support member (4) in a hollow chamber (20) until the retaining collar (2).

3. Method as claimed in any one of the preceding claims,
**characterized in that** the valve housing (1) has a one-part design, and its end remote from the second valve passage (6) is closed by a plug (14) acting as a magnet core and being designed as a cold-formed or extrusion moulded part.

4. Method as claimed in claim 1,
**characterized in that** the retaining collar (2) is formed from a cold-formed part.

5. Method as claimed in any one of the preceding claims 1 to 3,
**characterized in that** the valve housing (1) is formed of two sleeve parts (1a, 1b) inserted into each other in sections, and the outside sleeve part (1b) is designed in a deepdrawing operation into the shape of a housing bowl whose bent edge forms the retaining collar (2) .

6. Method as claimed in claim 1,
**characterized in that** the second valve closure member (8) with its inside wall is centred on a tappet portion of a magnet armature (15) accommodating the first valve closure member (7), said armature being made from a cold-formed part.

## Revendications

1. Procédé de fabrication et de fixation d'une soupape électromagnétique, en particulier pour systèmes de freinage de véhicule automobile à régulation du glissement, comportant un premier et un deuxième obturateur de soupape (7, 8) disposés dans un boîtier de soupape (1), lesquels, dans une disposition coaxiale dans le boîtier de soupape (1), peuvent ouvrir ou fermer un premier ainsi qu'un deuxième passage de soupape (5, 6), comportant un canal d'entrée de fluide sous pression et un canal de sortie de fluide sous pression (13, 19) débouchant dans le boîtier de soupape (1), le premier obturateur de soupape (7) pouvant ouvrir ou fermer, en fonction de l'excitation électromagnétique d'une bobine de soupape (27), le premier passage de soupape (5) situé dans le deuxième obturateur de soupape (8), et le deuxième passage de soupape (6), disposé entre le boîtier de soupape (1) et le deuxième obturateur de soupape (8), pouvant être commuté hydrauliquement en position ouverte, exclusivement en position ouverte du premier obturateur de soupape (7), **caractérisé par** les caractéristiques suivantes :
- emboutissage profond du boîtier de soupape (1) pour former un manchon,
- réalisation d'une collerette de maintien (2) par un procédé de déformation sans enlèvement de copeaux, laquelle est fixée par soudure à laser sur le pourtour extérieur du boîtier de soupape (1),
- emboutissage profond du deuxième obturateur de soupape (8) pour obtenir un contour en pot, le premier passage de soupape (5) étant estampé ou matricé directement dans le fond du pot à paroi mince,
- réalisation du deuxième passage de soupape (6) par estampage ou matriçage d'une ouverture dans l'extrémité inférieure du boîtier de soupape (1), la section d'ouverture du deuxième passage de soupape (6) présentant, du fait de l'estampage ou du matriçage, une plus grande largeur nominale que le premier passage de soupape (5),
- fixation de la collerette de maintien (2) dans un porte-soupape (4) au moyen d'un matage extérieur (3) de volumes du matériau du porte-soupape (4).

2. Procédé selon la revendication 1, **caractérisé en ce que** le boîtier de soupape (1) présente, dans la zone du deuxième passage de soupape (6),un gradin de boîtier (9) sur le pourtour extérieur duquel est disposée une bague d'étanchéité (10) qui est pressée, dans la direction longitudinale par rapport à l'axe de rotation de la soupape, contre un gradin du perçage (11) du porte-soupape (4), et est limitée dans la direction transversale à l'axe de rotation de la soupape, par un filtre annulaire (12) qui, recouvrant l'entrée de fluide sous pression (13), s'étend entre le boîtier de soupape (1) et la paroi intérieure du porte-soupape (4) dans une cavité (20), jusqu'à la collerette de maintien (2).

3. Procédé selon l'une des revendications précédentes, **caractérisé en ce que** le boîtier de soupape (1) est réalisé d'un seul tenant, son extrémité tournée à l'opposé du deuxième passage de soupape (6) est obturée par un bouchon (14) qui sert de noyau magnétique et est réalisé comme pièce forgée à froid ou formée par fluage.

4. Procédé selon la revendication 1, **caractérisé en ce que** la collerette de maintien (2) est formée par une pièce forgée à froid.

5. Procédé selon l'une des revendications 1 à 3 précédentes, **caractérisé en ce que** le boîtier de soupape (1) est formé de deux parties de manchon (1a, 1b) insérées l'une dans l'autre par endroits, la partie de manchon extérieure (1b) étant réalisée par procédé d'emboutissage profond en tant que pot de boîtier dont le bord replié forme la collerette de maintien(2).

6. Procédé selon la revendication 1, **caractérisé en ce que** le deuxième obturateur de soupape (8) est centré par sa paroi intérieure sur un tronçon de poussoir, recevant le premier obturateur de soupape (7), d'un induit magnétique (15), qui est réalisé dans une pièce forgée à froid.
